# EUROPÄISCHE PATENTANMELDUNG

(11) **EP 3 954 571 A1**
(43) Veröffentlichungstag der Anmeldung: **16.02.2022**
(21) Anmeldenummer: 21188145.3
(22) Anmeldetag: 28.07.2021
(51) Int. Cl.: B60L 15/00, B60L 50/50

(54) **LEISTUNGSELEKTRONIK EINER BATTERIE-ELEKTRISCH ANGETRIEBENEN MOBILEN ARBEITSMASCHINE UND MOBILE ARBEITSMASCHINE**

(30) Priorität: 10.08.2020 DE 102020120981
(71) Anmelder: STILL GmbH, 22113 Hamburg (DE)
(72) Erfinder: WILHÖFT, Adolf, 22885 Barsbüttel (DE); OSPER, Gerald, 22147 Hamburg (DE)
(74) Vertreter: Patentship Patentanwaltgesellschaft

(57) **Zusammenfassung**

Die Erfindung betrifft ein Leistungselektronik einer batterie-elektrisch angetriebenen mobilen Arbeitsmaschine, insbesondere eines Flurförderzeugs, umfassend eine Traktionsbatterie (1), einen Wechselrichter (3) und einen elektrischen Antriebsmotor (M), wobei der Wechselrichter (3) gleichspannungsseitig mit der Traktionsbatterie (1) und wechselspannungsseitig mit dem Antriebsmotor (M) verbunden ist. Es wird vorgeschlagen, dass gleichspannungsseitig an den Wechselrichter (3) ein Gleichspannungswandler (4) angeschlossen ist, der mit einer Sekundärbatterie (2) verbunden ist. Außerdem betrifft die Erfindung eine mobile Arbeitsmaschine, insbesondere ein Flurförderzeug, mit einem batterie-elektrischen Antrieb.

## Beschreibung

Die Erfindung betrifft eine Leistungselektronik einer batterie-elektrisch angetriebenen mobilen Arbeitsmaschine, insbesondere eines Flurförderzeugs, umfassend eine Traktionsbatterie, einen Wechselrichter und einen elektrischen Antriebsmotor, wobei der Wechselrichter gleichspannungsseitig mit der Traktionsbatterie und wechselspannungsseitig mit dem Antriebsmotor verbunden ist.

Außerdem betrifft die Erfindung eine mobile Arbeitsmaschine, insbesondere ein Flurförderzeug, mit einem batterie-elektrischen Antrieb.

Mobile Arbeitsmaschinen, insbesondere Flurförderzeuge, sind in jüngster Zeit vermehrt mit batterie-elektrisch betriebenen Antriebssystemen ausgestattet. Im Falle von Gegengewichtsgabelstaplern werden solche Flurförderzeuge auch als Batteriestapler bezeichnet. Dabei umfasst das Antriebssystem eine Traktionsbatterie als Energiequelle und mindestens einen, von der Traktionsbatterie mit Strom versorgten, elektrischen Antriebsmotor. Der Antriebsmotor ist in der Regel ein Drehstrommotor, beispielsweise Asynchronmotor. Zur Versorgung des Antriebsmotors mit Wechselstrom ist üblicherweise zwischen der Gleichstrom liefernden Traktionsbatterie und dem Antriebsmotor ein Wechselrichter zwischengeschaltet.

Häufig ist auch eine Versorgung von Nebenverbrauchern, zum Beispiel Heizungs- und Klimaanlagen sowie Beleuchtungsanlagen und Warnbeleuchtungseinrichtungen, mit elektrischem Strom erforderlich. Bei einigen mobilen Arbeitsmaschinen werden auch elektrische Brems- und Lenkungseinrichtungen verbaut.

Da diese Nebenverbraucher in der Regel auf einem wesentlich niedrigeren Spannungsniveau arbeiten als die Traktionsbatterie, erfordert die Versorgung der Nebenverbraucher mit Strom aus der Traktionsbatterie einen erhöhten technischen Aufwand.

Insbesondere bei sicherheitsrelevanten Verbrauchern, wie den elektrischen Brems- und Lenkungseinrichtungen und Warnbeleuchtungseinrichtungen, kann die Versorgung durch die Traktionsbatterie problematisch sein, weil ein Ausfall der Traktionsbatterie dann auch diese Einrichtungen betrifft.

Der vorliegenden Erfindung liegt die Aufgabe zugrunde, eine Leistungselektronik der eingangs genannten Art sowie eine mobile Arbeitsmaschine, insbesondere ein Flurförderzeug, mit einem batterie-elektrischen Antrieb so auszugestalten, dass eine sichere Versorgung der Nebenverbraucher mit geringem technischen Aufwand gewährleistet ist.

Diese Aufgabe wird bei der Leistungselektronik erfindungsgemäß dadurch gelöst, dass gleichspannungsseitig an den Wechselrichter ein Gleichspannungswandler angeschlossen ist, der mit einer Sekundärbatterie verbunden ist.

Die Sekundärbatterie wird also mit Strom aus der Traktionsbatterie geladen und kann die Nebenverbraucher auf dem üblichen niedrigeren Spannungsniveau speisen. Eine Beeinträchtigung der Traktionsbatterie, beispielsweise ein starker Spannungsabfall durch hohe Belastung der Traktionsbatterie, beeinflusst somit die Versorgung der Nebenverbraucher nicht.

Dabei ist die Traktionsbatterie vorteilhafterweise als Hochvoltbatterie, insbesondere mit einer Spannung zwischen 48 und 800 Volt, und die Sekundärbatterie als Niedrigvoltbatterie, insbesondere mit einer Spannung von 6 bis 120 Volt, ausgebildet.

Gemäß einer besonders bevorzugten Ausgestaltung der Erfindung sind der Wechselrichter und der Gleichspannungswandler in einem gemeinsamen Gehäuse integriert.

Dies ermöglicht eine sehr kompakte Ausführung der Leistungselektronik, wodurch Bauraum eingespart werden kann. Es entfallen Verbindungskabel und aufgrund der kurzen Anschlüsse ist die Induktivität der Leitungen sehr viel kleiner und es werden nachteilige Schwingungen verringert bzw. vermieden. Durch eine verringerte Anzahl von Steckverbindungen steigt weiterhin die Zuverlässigkeit der Leistungselektronik.

Zweckmäßigerweise sind der Wechselrichter und der Gleichspannungswandler auf einer gemeinsamen Platine angeordnet.

Dadurch werden Leitungen vermieden und Stromlaufwege auf kürzest mögliche Strecken beschränkt. Dies vermeidet störenden Schwingungen. Auch werden Kosten und Bauraum eingespart. Durch die geringere Anzahl an Komponenten und den Wegfall von Steckverbindungen erhöht sich auch zusätzlich die Zuverlässigkeit neben der Kostenverringerung.

Eine weitere vorteilhafte Ausgestaltung sieht vor, dass der Wechselrichter und der Gleichspannungswandler einen gemeinsamen Steuerungsrechner aufweisen.

Somit können Kosten und Bauraum weiter eingespart werden. Auch kann für den Wechselrichter und den Gleichspannungswandler allein durch Software und einen einzigen Steuerungsrechner die Steuerung durchgeführt werden.

Üblicherweise verfügen Umrichter über Filter. Bevorzugt nutzen die gleichspannungsseitigen Filter des Wechselrichters und des Gleichspannungswandlers einen gemeinsamen Kondensator oder eine gemeinsame Kondensatoranordnung.

Der Kondensator eines Eingangsfilters nimmt in der Regel einen erheblichen Bauraum ein. So kann bei einem Leistungsumrichter für einen Fahrantriebsmotor nach dem Stand der Technik der Kondensator bzw. eine Mehrzahl von Kondensatoren in Form einer Kondensatoranordnung 50% des Bauraums beanspruchen. Durch die gemeinsame Nutzung für den Wechselrichter und den Gleichspannungswandler kann der Bauraum erheblich reduziert werden und es werden Kosten gespart.

In einer besonders vorteilhaften Ausführungsform der Erfindung ist die Traktionsbatterie als Lithium-Ionen-Batterie ausgebildet.

In diesem Fall sieht eine bevorzugte Weiterbildung des Erfindungsgedankens vor, dass die Traktionsbatterie über ein Batteriemanagementsystem verfügt, das von der Sekundärbatterie mit Strom versorgt wird. Somit kann auf ein in die Traktionsbatterie integriertes Netzteil zur Speisung des Batteriemanagementsystems verzichtet werden.

Die Erfindung betrifft ferner eine mobile Arbeitsmaschine, insbesondere ein Flurförderzeug, mit einem batterie-elektrischen Antrieb.

Bei der mobilen Arbeitsmaschine wird die gestellte Aufgabe dadurch gelöst, dass die mobile Arbeitsmaschine eine Leistungselektronik der oben beschriebenen Art aufweist, bei der gleichspannungsseitig an den Wechselrichter ein Gleichspannungswandler angeschlossen ist, der mit einer Sekundärbatterie verbunden ist.

Vorzugsweise steht die Sekundärbatterie zur Stromversorgung mit mindestens einem Nebenverbraucher der mobilen Arbeitsmaschine, insbesondere mit einer Heizungseinrichtung und/oder einer Klimaanlage und/oder einer Beleuchtungsanlage und/oder einer Batterieklimatisierung und/oder einer elektrischen Bremseinrichtung und/oder einer elektrischen Lenkungseinrichtung und/oder einer Warnbeleuchtungseinrichtung in Verbindung.

Eine vorteilhafte Weiterbildung der Erfindung sieht vor, dass die mobile Arbeitsmaschine einen Mehr-Motoren-Antrieb aufweist, wobei jedem Antriebsmotor ein eigener Wechselrichter zugeordnet ist. Bei einer mobilen Arbeitsmaschine mit einem zwei Motoren-Fahrantrieb ist es beispielsweise möglich, in dem gemeinsamen Gehäuse einen weiteren Wechselrichter für den zweiten Fahr-Antriebsmotor einzubauen. Entsprechend ist es möglich, bei einer mobilen Arbeitsmaschine mit einer Arbeitshydraulik, die einen elektrischen Pumpenmotor aufweist, in dem gemeinsamen Gehäuse einen weiteren Wechselrichter für den elektrischen Pumpenmotor einzubauen.

Weitere Vorteile und Einzelheiten der Erfindung werden anhand der in den schematischen Figuren dargestellten Ausführungsbeispiele näher erläutert. Hierbei zeigen
- Figur 1: ein Schaltschema der erfindungsgemäßen Leistungselektronik und
- Figur 2: ein Schaltschema der erfindungsgemäßen Leistungselektronik in einer Ausgestaltung mit einem Batteriemanagementsystem der Traktionsbatterie.

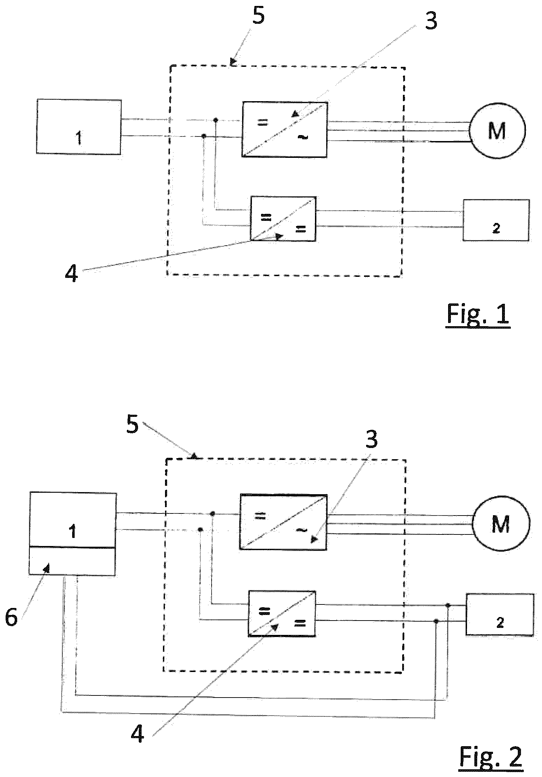

In der Figur 1 ist eine Leistungselektronik einer mobilen Arbeitsmaschine, insbesondere eines batterie-elektrisch betriebenen Flurförderzeugs, dargestellt. Die Leistungselektronik umfasst eine Traktionsbatterie 1 und einen elektrischen Antriebsmotor M, der beispielsweise als Fahr-Antriebsmotor eines Fahrantriebs ausgebildet ist. Der Antriebsmotor M ist als Drehstrommotor ausgebildet. Zur Versorgung des Antriebsmotors M mit Wechselstrom ist zwischen der Gleichstrom liefernden Traktionsbatterie 1 und dem Antriebsmotor M ein Wechselrichter 3 zwischengeschaltet.

Bei der Traktionsbatterie 1 handelt es sich bevorzugt um eine Hochvoltbatterie mit einer Spannung von zum Beispiel 48 bis 800 Volt.

Zur Versorgung von Nebenverbrauchern der mobilen Arbeitsmaschine, wie zum Beispiel Heizungs- und Klimaanlagen, Beleuchtungsanlagen und Warnbeleuchtungseinrichtungen sowie elektrischen Brems- und Lenkungseinrichtungen mit elektrischem Strom, ist eine Sekundärbatterie 2 vorgesehen. Die Sekundärbatterie 2 hat ein Spannungsniveau von zum Beispiel 12 Volt und kann somit die Nebenverbraucher auf dem hierfür üblichen Spannungsniveau und unabhängig von der Traktionsbatterie 1 speisen.

Die Sekundärbatterie 2 ist über einen Gleichspannungswandler 4 gleichspannungsseitig an den Wechselrichter 3 angeschlossen. Somit kann die Sekundärbatterie 2 aus der Traktionsbatterie 1 geladen werden.

Um eine besonders kompakte Bauweise der Leistungselektronik zu ermöglichen, sind der Wechselrichter 3 und der Gleichspannungswandler 4 in einem gemeinsamen Gehäuse 5 integriert.

Die Figur 2 zeigt eine Ausgestaltung der Leistungselektronik aus Figur 1 mit einer Traktionsbatterie 1, die als Lithium-Ionen-Batterie mit einem Batteriemanagementsystem 6 ausgebildet ist. Das Batteriemanagementsystem 6 wird aus der Sekundärbatterie 2 mit Strom versorgt. Somit kann auf ein in der Traktionsbatterie 1 integriertes Netzteil zur Stromversorgung des Batteriemanagementsystems 6 verzichtet werden.

## Patentansprüche

1. Leistungselektronik einer batterie-elektrisch angetriebenen mobilen Arbeitsmaschine, insbesondere eines Flurförderzeugs, umfassend eine Traktionsbatterie (1), einen Wechselrichter (3) und einen elektrischen Antriebsmotor (M), wobei der Wechselrichter (3) gleichspannungsseitig mit der Traktionsbatterie (1) und wechselspannungsseitig mit dem Antriebsmotor (M) verbunden ist, **dadurch gekennzeichnet, dass** gleichspannungsseitig an den Wechselrichter (3) ein Gleichspannungswandler (4) angeschlossen ist, der mit einer Sekundärbatterie (2) verbunden ist.

2. Leistungselektronik nach Anspruch 1, **dadurch gekennzeichnet, dass** die Traktionsbatterie (1) als Hochvoltbatterie, insbesondere mit einer Spannung zwischen 48 und 800 Volt, und die Sekundärbatterie (2) als Niedrigvoltbatterie, insbesondere mit einer Spannung von 6 bis 120 Volt, ausgebildet ist.

3. Leistungselektronik nach Anspruch 1 oder 2, **dadurch gekennzeichnet, dass** der Wechselrichter (3) und der Gleichspannungswandler (4) in einem gemeinsamen Gehäuse (5) integriert sind.

4. Leistungselektronik nach einem der Ansprüche 1 bis 3, **dadurch gekennzeichnet, dass** der Wechselrichter (3) und der Gleichspannungswandler (4) auf einer gemeinsamen Platine angeordnet sind.

5. Leistungselektronik nach einem der Ansprüche 1 bis 4, **dadurch gekennzeichnet, dass** der Wechselrichter (3) und der Gleichspannungswandler (4) einen gemeinsamen Steuerungsrechner aufweisen.

6. Leistungselektronik nach einem der Ansprüche 1 bis 5, **dadurch gekennzeichnet, dass** die Traktionsbatterie (1) als Lithium-Ionen-Batterie ausgebildet ist.

7. Leistungselektronik nach einem der Ansprüche 1 bis 6, **dadurch gekennzeichnet, dass** die Traktionsbatterie (1) über ein Batteriemanagementsystem (6) verfügt, das von der Sekundärbatterie (2) mit Strom versorgt wird.

8. Mobile Arbeitsmaschine, insbesondere Flurförderzeug, mit einem batterie-elektrischen Antrieb, der eine Leistungselektronik nach einem der Ansprüche 1 bis 7 aufweist.

9. Mobile Arbeitsmaschine nach Anspruch 8, **dadurch gekennzeichnet, dass** die Sekundärbatterie (2) zur Stromversorgung mit mindestens einem Nebenverbraucher der mobilen Arbeitsmaschine, insbesondere mit einer Heizungseinrichtung und/oder einer Klimaanlage und/oder einer Beleuchtungsanlage und/oder einer Batterieklimatisierung und/oder einer elektrischen Bremseinrichtung und/oder einer elektrischen Lenkungseinrichtung und/oder einer Warnbeleuchtungseinrichtung in Verbindung steht.

10. Mobile Arbeitsmaschine nach Anspruch 8 oder 9, **dadurch gekennzeichnet, dass** die mobile Arbeitsmaschine einen Mehr-Motoren-Antrieb aufweist, wobei jedem Antriebsmotor (M) ein eigener Wechselrichter (3) zugeordnet ist.
